# EUROPEAN PATENT SPECIFICATION

(11) **EP 4 487 681 B1**
(45) Date of publication and mention of the grant of the patent: **05.11.2025**
(21) Application number: 24161232.4
(22) Date of filing: 04.03.2024
(51) Int. Cl.: A01K 15/02

(54) **INTERACTIVE DEVICE FOR PETS**
INTERAKTIVE VORRICHTUNG FÜR HAUSTIERE
DISPOSITIF INTERACTIF POUR ANIMAUX DOMESTIQUES

(30) Priority: 07.07.2023 TW 112125412
(43) Date of publication of application: 08.01.2025
(73) Proprietor: Tomofun Co., Ltd., Taipei City 10542 (TW)
(72) Inventor: CHANG, Yu Chen, 10542 Taipei City (TW); CHANG, Chia Yen, 10542 Taipei City (TW); CHEN, Min Wei, 10542 Taipei City (TW)
(74) Representative: Wohlfahrt, Jan Günther

(56) References cited:
- EP-A1- 3 566 572
- KR-A- 20200 102 176
- KR-A- 20200 106 778

## Description

The application relates generally to interactive devices for pets, and more particularly, to interactive devices for pets with an image capture unit and a stick.

### BACKGROUND OF THE INVENTION

With the rapid changes of lifestyle that have taken place in recent years, pets have become indispensable to a lot of people. Lots of people keep pets at home, but it is difficult to monitor the pet's behavior and the pet's physical condition when the pet owner leaves the pet home alone. Thus, some pet owners dispose a photography apparatus at home to observe the pet's behavior. However, there is no interaction between the pet and conventional photography apparatus, making it hard to attract the pet to approach the photography apparatus. Furthermore, the pet's physical condition may deteriorate from enduring lack of exercise. Therefore, how to observe the pet's behavior and interact with the pet when the pet owner cannot stay with the pet has become an important issue.

KR 2020 0106778 A and KR 2020 0102176 A disclose play devices for pets.

### SUMMARY OF THE INVENTION

To address the deficiencies of conventional problem, an embodiment of the invention provides an interactive device for pets comprising a main body, a circuit unit, an image capture unit and a stick, wherein the main body comprising a supporting portion. The circuit unit and the image capture unit are disposed in the main body. The image capture unit is electrically connected to the circuit unit. The stick has a first end and a second end. When a first end of the stick is inserted into the supporting portion, a second end of the stick is located at a start position. The stick is rotatable with respect to the main body. An included angle exists between the supporting portion and a vertical direction of the main body. The second end of the stick returns to the start position when rotation of the stick ends. The start position of the second end of the stick is located in an image capturable range of the image capture unit.

In another aspect of the application, the interactive device for pets further comprises a stand disposed on outer surface of the main body, the supporting portion configured to be disposed in the stand.

In another aspect of the application, the interactive device for pets further comprises a pet toy configured to be connected with the second end of the stick.

In another aspect of the application, the stick is a cat teaser.

In another aspect of the application, the included angle is between 1 degree and 89 degrees.

In another aspect of the application, the included angle is 16.6 degrees.

In another aspect of the application, the image capture unit comprises a camera, a microphone, and a speaker.

In another aspect of the application, the image capture unit has communication function for transferring audio and video files output by the camera and the microphone to a user device, and outputting an audio file received from the user device via the speaker.

In another aspect of the application, the user device is a smart phone, a personal computer, a laptop computer or a tablet computer.

Other aspects and features of the application will become apparent to those with ordinary skill in the art upon review of the following descriptions of specific embodiments of the interactive device for pets.

### BRIEF DESCRIPTION OF THE DRAWINGS

FIG. 1 is a block diagram of an interactive device for pets according to an embodiment of the invention;
FIG. 2 is a schematic diagram of an interactive device for pets according to an embodiment of the invention;
FIG. 3 is a side view of an interactive device for pets according to an embodiment of the invention;
FIG. 4 is a schematic diagram of example use-case of an interactive device for pets according to an embodiment of the invention.

### DETAILED DESCRIPTION

The making and using of the embodiments of the interactive device for pets is discussed in detail below. It should be appreciated, however, that the embodiments provide many applicable inventive concepts that can be embodied in a wide variety of specific contexts. The specific embodiments discussed are merely illustrative of specific ways to make and use the embodiments, and do not limit the scope of the disclosure.

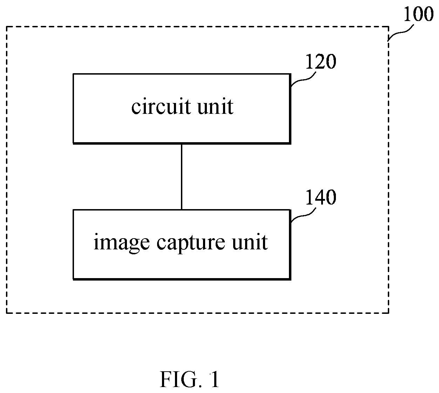

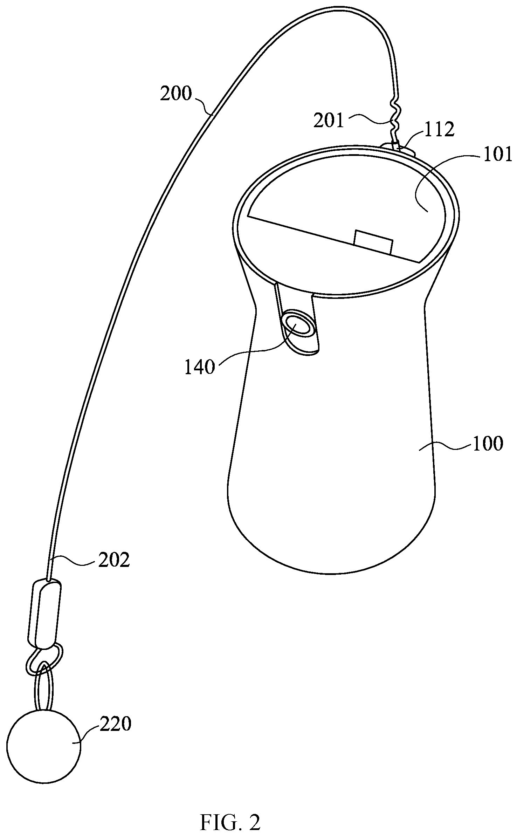

Referring to FIG. 1 and FIG.2, FIG. 1 is a block diagram of an interactive device for pets according to an embodiment of the invention. FIG.2 is a schematic diagram of an interactive device for pets according to an embodiment of the invention. In an embodiment of the invention, an interactive device for pets includes a main body 100, a circuit unit 120, an image capture unit 140 and a stick 200. There is a recess 101 formed in the main body 100. A cover (not shown) detachably seals the recess 101. The main body 100 includes a supporting portion 112. The circuit unit 120 and image capture unit 140 are disposed in the main body 100. The image capture unit 140 is electrically connected to the circuit unit 120. The stick 200 has a first end 201 and a second end 202. The second end 202 of the stick 200 may be connected with pet toy 220. The pet may be a cat or another animal. When the first end 201 of the stick 200 is inserted into the supporting portion 112, the second end 202 of the stick 200 is located at a start position. The stick 200 can rotate relative to the main body 100. Specifically, an included angle exists between the supporting portion 112 and a vertical direction of the main body 100. A range of the included angle is between 1 degree and 89 degrees. Accordingly, the second end 202 of the stick 200 returns to the same position as the start position when rotation of the stick 200 ends.

It should be understood that the components described in the embodiment of FIG. 2 are for illustrative purposes only and are not intended to limit the scope of the application. For example, the interactive device for pets may include additional components, such as a power supply, network communication device, storage device, etc. The power supply may be a mobile/replaceable battery providing power to all the other components of the interactive device for pets. The network communication device is configured to provide a network connection to support network communication of the interactive device for pets. The storage device may be a non-transitory machine-readable storage medium, including a memory, such as a FLASH memory or a Non-volatile Random Access Memory (NVRAM), or a magnetic storage device, such as a hard disk, or any combination thereof for storing image data or voice data.

The circuit unit 120 may include various circuits for transmitting control signal to image capture unit 140, receiving image data from image capture unit 140, controlling the network communication device for obtaining network connections, and retrieving data to and from the storage device.

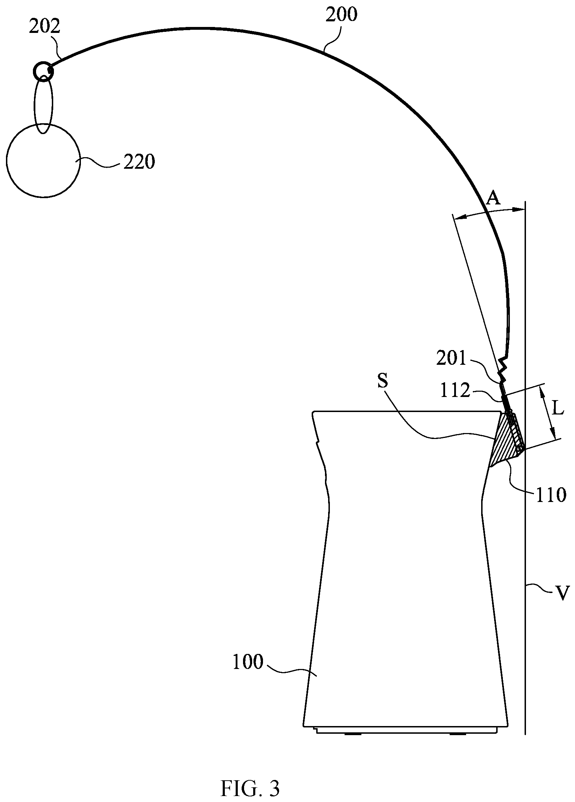

Referring to FIG. 3, FIG. 3 is a side view of an interactive device for pets according to an embodiment of the invention. In an embodiment of the invention, a stand 110 is disposed on outer surface of the main body 100. A supporting portion 112 is configured to be disposed in the stand 110. The supporting portion 112 is configured to be disposed so that an included angle A exists between the supporting portion 112 and a vertical direction V of the main body 100. The included angle A is 16.6 degrees. A diameter of the stick 200 is 1mm. A length of the stick 200 is 500 mm. A material of the stick 200 is stainless steel. A length L of the supporting portion 112 is 37.7 mm. A size S of the stand 110 is 35.7 mm. The supporting portion 112 is capable of containing and fixing the first end 201 of stick 200. For example, the stick 200 has cylindrical structure. The supporting portion 112 has columnar hollow structure. An internal thread (not shown) is disposed on inner wall of the supporting portion 112. An external thread (not shown) is disposed on the outer surface of the first end 201 of stick 200. The internal thread and external thread are engaged to each other so that the first end 201 of stick 200 can be inserted into the supporting portion 112 firmly.

The second end 202 of stick 200 may be connected with the pet toy 220. In the embodiment, the pet toy 220 is a feather (weight is less than 9 grams). For example, the pet toy 220 can be replaced with a mouse-shaped doll to stimulate the hunting instinct of the cat pet.

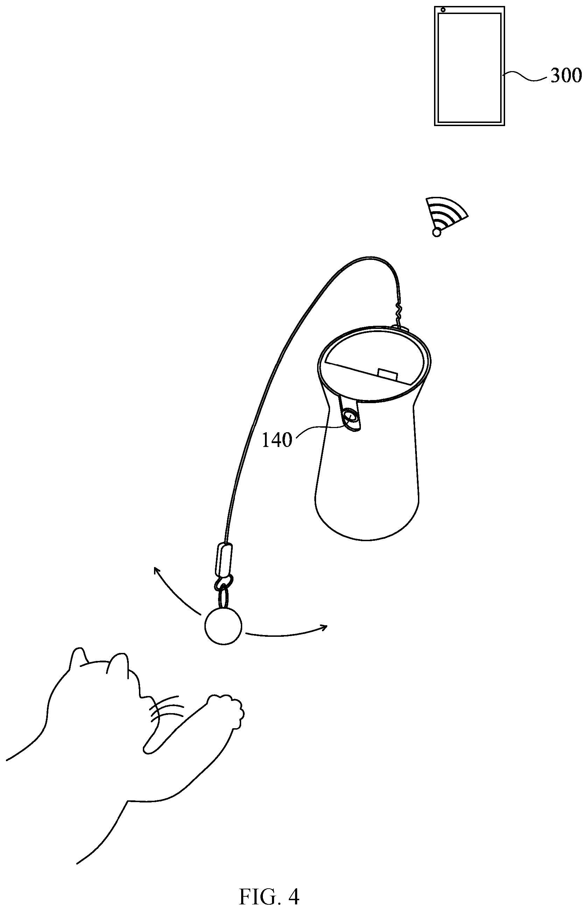

Referring to FIG. 2 and FIG.4, FIG. 4 is a schematic diagram of example use-case of an interactive device for pets according to an embodiment of the invention. As shown in FIG. 4, one end of stick 200 is located forwardly at main body 100. The other end of stick 200 is located at a start position (for example, just in front of image capture unit 140 at a center of main body 100). When pets (such as cats) move the pet toy 220 so that the stick 200 (for example, cat tease) begins to rotate, the other end of stick 200 returns to the same position as the start position when the rotation ends. Since the start position is located in a range in which image can be captured by image capture unit 140, it is beneficial to shoot gaming status of pets by image capture unit 140. The image capture unit 140 includes photographing camera, microphone and speaker (not shown). The image capture unit 140 with communication function(for example, wireless webcam)is used to transmit audio and video files output by the photographing camera and microphone to user device 300, and output an audio file received by the user device 300 (for example, voice record by users) via the speaker . The user device 300 can be remote smart phone, personal computer, laptop computer, tablet computer or any computing device.

It should be understood that interactive device for pets of this application has a stick capable of returning to identical position after rotation. Pet owners can know immediately health status of pets and view gaming status via video/audio output by image capture unit. Also, interactive relationship between pet owners and pets can be increased by voice of pet owners output by the speaker.

While the application has been described by way of example and in terms of preferred embodiment, it should be understood that the application cannot be limited thereto. Those who are skilled in this technology can still make various alterations and modifications without departing from the scope of this application. Therefore, the scope of the present application shall be defined and protected by the following claims and their equivalents.

## Claims

1. . An interactive device for pets comprising:
a main body (100) comprising a supporting portion (112), wherein an included angle defined between the supporting portion (112) and a vertical direction of the main body (100);
a circuit unit (120) disposed in the main body (100);
an image capture unit (140) disposed in the main body (100) and electrically connected to the circuit unit (120); and
a stick (200) having a first end (201) and a second end (202), wherein the first end (201) of the stick (200) is inserted into the supporting portion (112) with the second end (202) of the stick (200) being located at a start position, and the stick (200) is rotatable with respect to the main body (100),
wherein the second end (202) of the stick (200) returns to the start position when rotation of the stick (200) ends, **characterised in that**
the start position is located in an image capturable range of the image capture unit (140).

2. . The interactive device for pets as claimed in claim 1, further comprising:
a stand (110) disposed on outer surface of the main body (100), and the supporting portion (112) configured to be disposed in the stand (110).

3. . The interactive device for pets as claimed in any of claims 1 or 2, further comprising:
a pet toy (220) configured to be connected with the second end (202) of the stick (200).

4. . The interactive device for pets as claimed in any of claims 1 to 3, wherein the stick (200) is a cat teaser.

5. . The interactive device for pets as claimed in any of claims 1 to 4, wherein the included angle is between 1 degree and 89 degrees.

6. . The interactive device for pets as claimed in any of claims 1 to 5, wherein the included angle is 16.6 degrees.

7. . The interactive device for pets as claimed in any of claims 1 to 6, wherein the image capture unit (140) comprises a camera, a microphone, and a speaker.

8. . The interactive device for pets as claimed in claim 7, wherein the image capture unit (140) has communication function for transferring audio and video files output by the camera and the microphone to a user device (300), and outputting an audio file received from the user device (300) via the speaker.

9. . The interactive device for pets as claimed in claim 8, wherein the user device (300) is a smart phone, a personal computer, a laptop computer or a tablet computer.

## Patentansprüche

1. Interaktive Vorrichtung für Haustiere, umfassend:
einen Hauptkörper (100) umfassend einen Stützabschnitt (112), wobei ein eingeschlossener Winkel zwischen dem Stützabschnitt (112) und einer vertikalen Richtung des Hauptkörpers (100) definiert ist;
eine Schaltungseinheit (120), angeordnet in dem Hauptkörper (100);
eine Bildaufnahmeeinheit (140), angeordnet in dem Hauptkörper (100) und elektrisch verbunden mit der Schaltungseinheit (120); und
einen Stab (200), aufweisend ein erstes Ende (201) und ein zweites Ende (202), wobei das erste Ende (201) des Stabs (200) in den Stützabschnitt (112) eingeführt ist, wobei sich das zweite Ende (202) des Stabs (200) an einer Startposition befindet, und der Stab (200) in Bezug auf den Hauptkörper (100) rotierbar ist,
wobei das zweite Ende (202) des Stabs (200) in die Startposition zurückkehrt, wenn die Rotation des Stabs (200) endet, **dadurch gekennzeichnet, dass**
sich die Startposition in einem Bildaufnahmebereich der Bildaufnahmeeinheit (140) befindet.

2. Interaktive Vorrichtung für Haustiere gemäß Anspruch 1, ferner umfassend:
ein Gestell (110), angeordnet an der Oberfläche des Hauptkörpers (100), und den Stützabschnitt (112), ausgebildet, um in dem Gestell (110) angeordnet zu sein.

3. Interaktive Vorrichtung für Haustiere gemäß einem der Ansprüche 1 oder 2, ferner umfassend:
ein Haustierspielzeug (220), ausgebildet, um mit dem zweiten Ende (202) des Stabs (200) verbunden zu sein.

4. Interaktive Vorrichtung für Haustiere gemäß einem der Ansprüche 1 bis 3, wobei der Stab (200) ein Katzenspielgerät ist.

5. Interaktive Vorrichtung für Haustiere gemäß einem der Ansprüche 1 bis 4, wobei der eingeschlossene Winkel zwischen 1 Grad und 89 Grad liegt.

6. Interaktive Vorrichtung für Haustiere gemäß einem der Ansprüche 1 bis 5, wobei der eingeschlossene Winkel 16,6 Grad beträgt.

7. Interaktive Vorrichtung für Haustiere gemäß einem der Ansprüche 1 bis 6, wobei die Bildaufnahmeeinheit (140) eine Kamera, ein Mikrofon und einen Lautsprecher umfasst.

8. Interaktive Vorrichtung für Haustiere gemäß Anspruch 7, wobei die Bildaufnahmeeinheit (140) eine Kommunikationsfunktion zum Übertragen von Audio- und Videodateien, ausgegeben von der Kamera und dem Mikrofon an eine Benutzervorrichtung (300), und zum Ausgeben einer von der Benutzervorrichtung (300) empfangenen Audiodatei mittels des Lautsprechers aufweist.

9. Interaktive Vorrichtung für Haustiere gemäß Anspruch 8, wobei das Benutzergerät (300) ein Smartphone, ein persönlicher Computer, ein Laptop oder ein Tablet ist.

## Revendications

1. Dispositif interactif pour animaux domestiques comprenant :
un corps principal (100) comprenant une partie de support (112), dans lequel un angle inclus est défini entre la partie de support (112) et une direction verticale du corps principal (100) ;
une unité de circuit (120) disposée dans le corps principal (100) ;
une unité de capture d'image (140) disposée dans le corps principal (100) et reliée électriquement à l'unité de circuit (120) ; et
une canne (200) présentant une première extrémité (201) et une deuxième extrémité (202), dans lequel la première extrémité (201) de la canne (200) est insérée dans la partie de support (112) avec la deuxième extrémité (202) de la canne (200) étant située à une position de départ, et la canne (200) est rotative par rapport au corps principal (100),
dans lequel la deuxième extrémité (202) de la canne (200) revient à la position de départ lorsque la rotation de la canne (200) prend fin,
**caractérisé en ce que** la position de départ est située dans un champ capturable d'image de l'unité de capture d'image (140).

2. Dispositif interactif pour animaux domestiques selon la revendication 1, comprenant en outre :
un support (110) disposé sur la surface externe du corps principal (100), et la partie de support (112) configurée pour être disposée dans le support (110).

3. Dispositif interactif pour animaux domestiques selon l'une des revendications 1 ou 2, comprenant en outre :
un jouet pour animal domestique (220) configuré pour être relié à la deuxième extrémité (202) de la canne (200).

4. Dispositif interactif pour animaux domestiques selon l'une des revendications 1 à 3, dans lequel la canne (200) est un teaser pour chat.

5. Dispositif interactif pour animaux domestiques selon l'une des revendications 1 à 4, dans lequel l'angle inclus est entre 1 degré et 89 degrés.

6. Dispositif interactif pour animaux domestiques selon l'une des revendications 1 à 5, dans lequel l'angle inclus est de 16,6 degrés.

7. Dispositif interactif pour animaux domestiques selon l'une des revendications 1 à 6, dans lequel l'unité de capture d'image (140) comprend une caméra, un microphone et un haut-parleur.

8. Dispositif interactif pour animaux domestiques selon la revendication 7, dans lequel l'unité de capture d'image (140) possède une fonction de communication pour transférer des fichiers audio et vidéo délivrés en sortie par la caméra et le microphone vers un dispositif utilisateur (300), et délivrer en sortie un fichier audio reçu en provenance du dispositif utilisateur (300) via le haut-parleur.

9. Dispositif interactif pour animaux domestiques selon la revendication 8, dans lequel le dispositif utilisateur (300) est un téléphone intelligent, un ordinateur de bureau, un ordinateur portable ou un ordinateur tablette.
